# EUROPEAN PATENT APPLICATION

(11) **EP 1 736 387 A2**
(43) Date of publication of application: **27.12.2006**
(21) Application number: 06253020.9
(22) Date of filing: 12.06.2006
(51) Int. Cl.: B60T 8/88, B60T 8/171, B60T 17/22, B60C 23/06, B60G 17/015, B60G 17/0185

(54) **Wheel-end mounted multipurpose acceleration sensing device**

(30) Priority: 24.06.2005 US 166388
(71) Applicant: DANA CORPORATION, Toledo, OH 43615 (US)
(72) Inventor: Davison, Kent E., Sturgis, MI 49091 (US); McCann, Gerard, Kalamazoo, MI 49009 (US)
(74) Representative: Cheyne, John Robert Alexander M.

(57) **Abstract**

A method of, and sensor system for, monitoring movement of one or more components of a vehicle wheel/tire assembly (26) is disclosed. The desired monitoring functions are performed by one or more acceleration-sensing devices of a sensor (14), preferably, by one or more accelerometers, measuring vertical acceleration and the horizontal acceleration. The sensor (14) is mounted in the end of a vehicle axle (12) and provides input to a suspension system or brake system.

## Description

### BACKGROUND OF THE INVENTION

As suspension systems, braking systems and other wheel/tire related systems on trucks and other commercial vehicles become more complex and more dependent on related electronic and electromechanical systems, it has become possible and desirable to monitor critical functions of the aforementioned suspension, braking, wheel/tire and like systems to detect unusual wear, vibration or other conditions which might indicate potential failure of one or more components of the monitored system.

For example, failure of a component of a wheel-end assembly can cause conditions which may cause a driver to lose control of a large commercial vehicle, such as a truck. Means to cost-effectively and reliably detect wheel-end component motion, such as unusual vibration which may be an indicator of conditions that could cause the component to fail, have not yet been developed.

Active and semi-active suspension systems require many electronic inputs to operate properly. Among these inputs are wheel/tire motions, which must be frequently, if not continuously, monitored in order to provide inputs for the operation of vehicle systems.

Thus, it would be desirable to have a monitoring system which would cost effectively and reliably monitor multiple functions on a vehicle having one or more of the previously noted wheel/tire related systems or other vehicle system.

### Related prior art includes:

U.S. Patent No. 3,675,495 teaches a pick-up unit, such as an accelerometer, located in a stationary part of the wheel, such as the backing plate of the wheel spindle or axle. A lead extends from the unit to a mobile cabinet containing circuitry, a meter for registering the magnitude of the signal produced from the unit and a stroboscopic light. The light is adapted to be flashed in time with the vibration of the wheel. The unit is used to determine if the wheel is unbalanced since the wheel will bounce or vibrate vertically and/or horizontally when rotated. The patent also teaches that two accelerometers, one to sense vibration in the horizontal direction and one to sense vibration in the vertical direction, can be used.

U.S. Patent No. 5,471,390 discloses a vehicle having sensors at each wheel to detect wheel speed. The patent does not disclose where exactly the sensors are located. The detected wheel speed is used, along with vehicle lateral acceleration values, vehicle longitudinal acceleration values, accelerator values, and braking values by a controller to determine maximum effective braking for the vehicle. The lateral acceleration and longitudinal acceleration values are sensed by sensors that are not adjacent the wheels.

U.S. Patent No. 6,225,894 teaches a rollover detector for vehicles comprising mounting three accelerometers on three separate axles of the trailer. The accelerometers are configured to detect forces in a single direction, specifically, the vertical direction. The patent indicates that the accelerometers can be mounted at spaced locations along the length of the vehicle, but it is silent regarding locating the accelerometers within the axles.

U.S. Patent No. 6,278,361 provides for a system for monitoring various vehicle conditions affecting the vehicle tires comprising one or more sensors either inside the tire or outside the tire on the wheel rim. The sensors are taught to be at least one radial accelerometer and at least one lateral accelerometer at each wheel. Temperature and pressure sensors can also be provided inside the tire. Preferably, the sensors are battery powered and controlled by a centrifugal switch so that they are only switched on when the vehicle is moving. A microprocessor, connected to each sensor, is used to determine tread wear, shock absorber performance, balance condition and/or wheel rotational speed of each wheel.

U.S. Patent No. 6,363,384 teaches locating an accelerometer on a vehicle axle. The accelerometer is depicted as located at the mid-point of the rear axle. The data from the accelerometer is used with data from wheel speed sensors to determine when the wheels are out of balance.

U.S. Patent No. 6,784,793 provides for a vehicle wheel vibration monitoring system comprising a vibration sensor mounted on each axle of a vehicle or trailer. Preferably, the sensor is a two-way acceleration-sensing valve. A microswitch is included in the sensor for producing an electrical signal when the valve is tripped. The patent indicates that the sensor is located on the axle adjacent a wheel. The electrical signal is sent to a control box for comparison with a prescribed vibration condition.

U.S. Patent No. 6,675,640 teaches a wheel speed sensor mounted in the end of a trailer axle. Wires extend from the sensor, through the axle to an electric current supplying controller. The controller is depicted as the electronic control module of the anti-lock brake sensor system of the trailer.

U.S. Patent Application Publication No. 2002/0005780 also teaches a sensor mounted in the end of a trailer axle. The sensor can sense not only wheel speed, but also wheel rotation direction. The sensor is connected to the ECU of the trailer.

U.S. Patent Application Publication No. 2001/0030466 discloses a sensor mounted in the end of an axle. The sensor is capable of monitoring the temperature proximate the wheel bearings, the vibration of one or more elements of the wheel mounting apparatus, the proximity of a rotating element of the wheel, and/or the direction of rotation of the wheel. The sensor may be connected to an ECM via three wires extending through the axle. The Publication also indicates that an acceleration-sensing element, such as an accelerometer, is provided on a printed circuit board in the sensor. The accelerometer can be used to detect vibrations of wheel end equipment, or vibrations from wheel bearings.

### SUMMARY OF THE INVENTION

The wheel end mounted multipurpose sensor system of the present invention comprises a vehicle having at least one axle, the at least one axle having a first end and a second end; at least one sensor mounted within at least one of the first end or the second end of the at least one axle, the sensor comprising an accelerometer capable of monitoring the acceleration of one or more components of a wheel/tire assembly affixed to the first or second end of the at least one axle, wherein the accelerometer operatively functions when the wheel/tire assembly of the vehicle is in contact with an essentially horizontal surface, and the wheel/tire assembly is in rotational movement with respect to such horizontal surface, the accelerometer being electrically connected to at least one control unit on said vehicle.

The invention further comprises a method of monitoring the movement of components of a vehicle wheel/tire assembly and providing inputs for the operation of related vehicle systems as described below:

A method of monitoring the movement of components of a vehicle wheel/tire assembly comprising providing at least one vehicle axle having a first end and a second end to which the first end and the second end of at least one wheel/tire assembly is mounted; mounting at least one sensor in at least one of the first end or the second end of the at least one axle, the at least one sensor comprising an acceleration sensing device; utilizing the acceleration sensing device to monitor at least wheel end component vibration and providing required inputs for the operation of related vehicle systems, the acceleration sensing device operatively monitoring the wheel-end component vibration and providing such system inputs when the at least one tire/wheel assembly is in contact with an essentially horizontal surface, and the at least one tire/wheel assembly is in rotational movement relative to such essentially horizontal surface.

### BRIEF DESCRIPTION OF THE DRAWINGS

The structure and operation of the invention, together with further advantages thereof, may best be understood by reference to the accompanying drawings and the following description.
Fig. 1 is a perspective view of a wheel-end sensor located in an end of a vehicle axle;
Fig. 2 shows two cross-sectional views of a vehicle axle;
Fig. 2A taken along line 2A-2A of Fig. 1;
Fig. 2B taken along line 2B-2B of Fig. 1;
Fig. 3 is a cross-sectional view of a wheel/tire assembly attached to a vehicle axle; and
Fig. 4 is a perspective view of a typical wheel bearing on an axle assembly such as might be used in connection with the present invention.

### DETAILED DESCRIPTION OF THE PREFERRED EMBODIMENT

While the invention may be susceptible to different embodiments, there is shown in the drawings and the following detailed discussion, a preferred embodiment with the understanding that the present disclosure is to be considered an exemplification of the principles of the invention and is not intended to limit the invention to that as illustrated and described herein.

The present invention is a sensor mounted in at least one end of a vehicle axle. The sensor has at least one acceleration-sensing device, and possibly two or more acceleration-sensing devices. Preferably, the acceleration-sensing device is an accelerometer. The accelerometer measures vibration of certain wheel end equipment, such as the wheel bearing or wheel bearings and/or the wheel itself. The accelerometer can also be used for tire monitoring such as, for example, monitoring of vibration. The accelerometer can also be used to monitor substantially vertical, and optionally, substantially horizontal, wheel end acceleration for active or semi-active suspension systems or on-the-fly anti-wheel hop optimization of an ABS algorithm. Additionally, the accelerometer can be used to recognize potentially destructive impacts at the wheel, such as impacts of the wheel with curbs, or potholes. Still further, the acceleration sensing device of the invention may monitor wheel speed, which signals may be utilized as additional input to one or more of the aforementioned vehicle systems, or for still other vehicle systems, such as anti-lock braking systems (ABS), electronic braking systems (EBS) and the like.

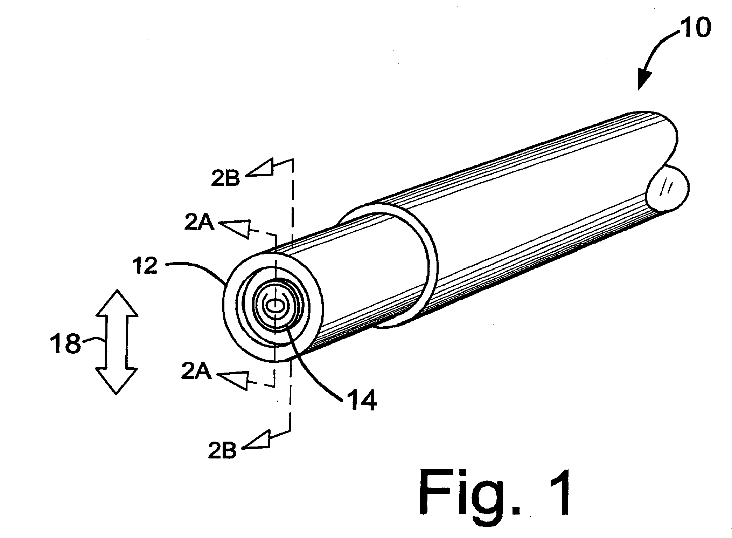

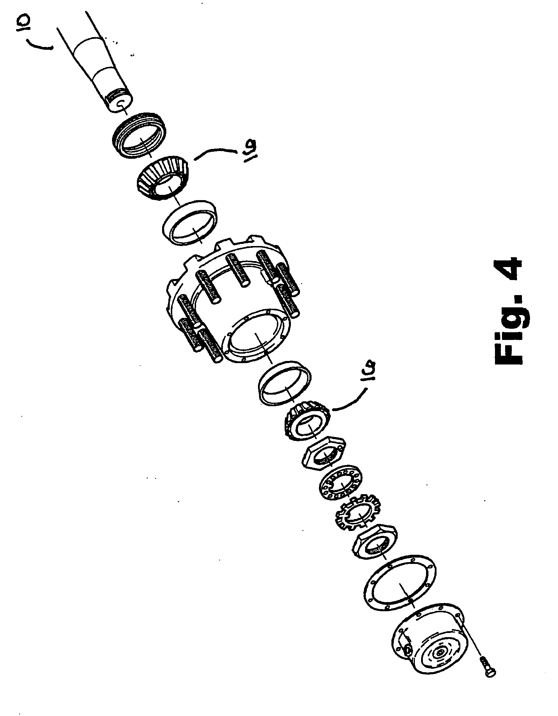

Fig. 1 illustrates a vehicle axle tube 10 having at least a first end 12. Adjacent to axle 10 is one or more wheel bearings 16 which bearing is shown in Fig. 4. In the end of the axle tube 10 is wheel-end sensor 14, which includes at least one accelerometer capable of measuring at least movement of one or more wheel-end assembly components in at least a vertical direction 18 relative to axle end 12. Reference to "axle" in this application may include a steering axle, a non-steering axle, or a non-continuous axle such as is associated with an independent suspension system.

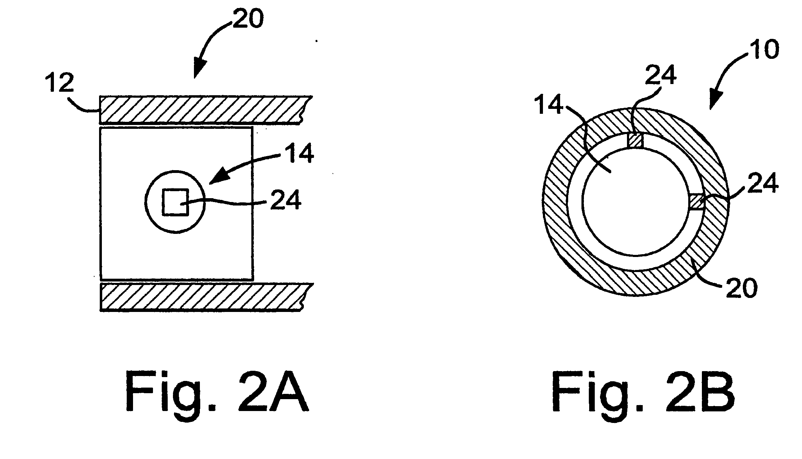

Fig. 2A shows a cross section of axle tube 10 taken along line 2A-2A of Fig. 1. Located inside at least one axle end 12 is sensor 14, including at least one accelerometer 24, positioned so as to be able to measure at least movement in vertical direction 18 of one or more wheel-end assembly components relative to axle end 12.

Fig. 2B shows a cross section of axle tube 10 taken along line 2B-2B of Fig. 1.. Within the wall 20 of axle tube 10 is shown sensor 14 including accelerometers 24, positioned so as to be able to measure both vertical and horizontal motion of wheel-end assembly 26 components.

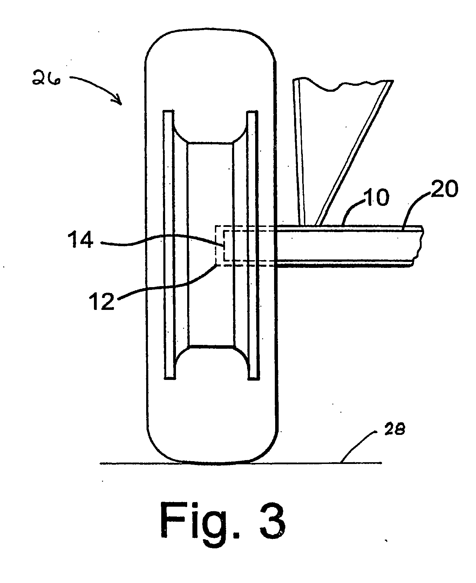

Fig. 3 illustrates a wheel-end assembly 26 including a tire and wheel attached in any conventional manner to vehicle axle tube 10. The sensor 14 of the present invention is shown, generally, inside wall 20 of axle tube 10 near axle end 12. Other wheel/tire assembly 26 components, such as wheel bearings and the like, may also be present.

As used in the present application the term "acceleration" refers to the rate of change of velocity of the motion of one or more components. Acceleration is often used as a mechanism to measure the magnitude and frequency of movements, such as vibration, although other means can be used to measure vibration.

In the present invention a sensor 14 is mounted in one, or both, ends 12 of a vehicle axle tube 10, particularly the axle of a semi-trailer, although a similar sensor could also be mounted in the powered tractor of a tractor-trailer. The sensor 14 contains at least an acceleration-sensing device 24 to monitor the movement of one or more components of a wheel/tire assembly 26, which is attached to at least one end 12 of axle 10. In particular, it is desired to monitor one or more components of wheel/tire assembly 26, also referred to herein as a wheel-end assembly, for undesirable forms of movement, such as vibration, which may indicate the onset of a potential problem relative to the subject wheel/tire assembly component.

The accelerometer 24 capable of monitoring, for example, vibration in a vertical or horizontal direction, has been found to be particularly useful for the purpose of monitoring such vibration. Monitoring of increasing vibration, particularly horizontal vibration 22, has been found to be especially useful in detecting a worsening problem with respect to a wheel/tire assembly component, or components.

Accelerometer 24 is also capable of monitoring substantially vertical motion of wheel-end components, which has been found to be particularly useful as input to vehicle systems such as active or semi-active suspension systems, and wheel speed sensing systems.

The at least one accelerometer of the present invention may effectively function to measure desired vertical or horizontal acceleration even though the orientation of the at least one accelerometer is offset somewhat from the precisely vertical or horizontal. In this configuration, some processing of the data may be necessary to extract the desired vertical or horizontal acceleration measurements, but is within the scope of the present invention.

The acceleration-sensing device 14 of the present invention operates to perform its intended function when the wheel/tire assembly is located on an essentially horizontal surface 28, such as a roadway, and also when the wheel/tire assembly 26 is in rotating movement relative to the essentially horizontal surface 28; that is, the vehicle is traveling down a roadway.

By way of example only, wheel/tire assembly 26 components which may be subject to vibratory motion, and which motion may be monitored using the accelerometer 24 of the present invention are, wheel bearing vibration, brake vibration and tire vibration.

The acceleration-sensing device 14 of the present invention monitors the movement of one or more wheel/tire assembly 26 components and generates one or more electrical signals based on the movement detected which are transmitted by any suitable method to at least one electrical control unit mounted on the vehicle. Examples of such electrical control units are those for controlling an active or a semi-active suspension system and if desired, an ABS or EBS system. The electrical control unit may perform multiple functions, and be comprised of various components, including one or more microprocessors. The microprocessor analyzes the electrical signal(s) from the acceleration-sensing device 14 to determine whether there is a problem with any of the wheel/tire assembly 26 components which are being monitored. Input signals to vehicle operating systems are utilized for proper system operability

Depending on the type of acceleration-sensing device 14 chosen, it may be capable of detecting vibrations in more than one frequency range, and generating electrical signals corresponding to the differing frequency ranges.

As previously mentioned, it may be desirable to measure the acceleration of a wheel-end assembly 26 component in both a horizontal and vertical axis relative to the end 12 of axle tube 10. To accurately measure movement/vibration in two axes, two accelerometers 14 may be utilized, or a single, dual-axis accelerometer may, instead, be used. It is possible for accelerometers having different useful measuring ranges to be used in such circumstances, as the forces to which different wheel/tire assembly 26 components are subjected may differ substantially. By way of example only, one accelerometer may have a useful measuring range of about 2.5g or less, while a second accelerometer may have a useful measuring range of about 14g or less. Those skilled in the art will appreciate that the measuring ranges of the accelerometers may or may not overlap with one another.

While a preferred embodiment of the present invention is shown and described, it is envisioned that those skilled in the art may devise various modifications of the present invention without departing from its spirit and scope.

## Claims

1. A method of monitoring one or more components of a vehicle wheel/tire assembly, comprising:
providing at least one vehicle axle having a first end and a second end to which first end or second end at least one wheel/tire assembly having various components is mounted;
mounting at least one sensor in at least one of the first end or the second end of the at least one axle, the at least one sensor comprising an acceleration sensing device;
utilizing the acceleration sensing device to simultaneously monitor, wheel/tire assembly component vibration and to provide input to vehicle operating systems, the acceleration sensing device operatively performing the monitoring and system input functions when the at least one tire/wheel assembly is in contact with an essentially horizontal surface, and the at least one tire/wheel assembly is in rotational movement relative to such essentially horizontal surface.

2. The method defined in claim 1, wherein the wheel/tire assembly component vibration monitored by the acceleration-sensing device comprises one or more of wheel bearing vibration, brake vibration and tire vibration.

3. The method defined in claim 1, wherein the vehicle operating systems to which input is provided comprises one or more of an active suspension system, a semi-active suspension system, an antilock brake system and an electronic brake system.

4. The method defined in claim 3, wherein signal inputs from the acceleration sensing device and from a wheel speed sensing system are both utilized to monitor at least one wheel/tire assembly component.

5. The method defined in claim 1, wherein the acceleration-sensing device is an accelerometer.

6. A wheel-end mounted multipurpose sensor system, comprising:
a vehicle having at least one axle, the at least one axle having a first end and a second end; and
at least one sensor system mounted within at least one of the first end or the second end of the at least one axle, the sensor system comprising an accelerometer capable of simultaneously:
monitoring the acceleration of one or more wheel/tire assembly components affixed to the at least one axle, wherein the accelerometer operatively functions when the wheel/tire assembly of the vehicle is in contact with an essentially horizontal surface, and the wheel/tire assembly is in rotational movement with respect to such horizontal surface, providing input to vehicle operating systems; the accelerometer being electrically connected to at least one control unit on said vehicle and providing electrical signals from the one or more wheel/tire assembly components to the at least one control unit, via the electrical connection.

7. The wheel-end mounted multipurpose sensor system defined in claim 5, wherein a sensor is mounted in both the first end and the second end of the vehicle axle.

8. The wheel-end mounted multipurpose sensor system defined in claim 5, wherein the accelerometer detects accelerations present in the wheel end area, and converts the detected acceleration to electrical signals in both a first frequency range and a second frequency range.

9. A wheel-end mounted multipurpose sensor system, comprising:
a vehicle having at least one axle, the at least one axle having a first end and a second end;
at least one sensor system mounted within at least one of the first end or the second end of the at least one axle, the sensor system comprising:
a first accelerometer for monitoring the acceleration of a first component of a wheel/tire assembly affixed to the first end or second end of the at least one axle; and
a second accelerometer for monitoring the acceleration of a second component of wheel/tire assembly affixed to the first end or second end of at least one axle, wherein the first accelerometer and second accelerometer operatively function when the wheel/tire assembly of the vehicle is in contact with an essentially horizontal surface, and the wheel/tire assembly is in rotational movement with respect to such horizontal surface, the first accelerometer and the second accelerometer being electrically connected to at least one control unit on said vehicle.

10. The wheel-end mounted multipurpose sensor system defined in claim 8, wherein such a sensor system is mounted in both the first end and second end of the vehicle axle.

11. The wheel-end mounted multipurpose sensor system defined in claim 9, wherein the first accelerometer monitors vibration of the first component to detect component malfunctions.

12. The wheel-end mounted multipurpose sensor system defined in claim 9, wherein the second accelerometer monitors movement of the second component to provide input information to one or more vehicle operating systems.

13. The wheel-end mounted multipurpose sensor system defined in claim 9, wherein the first accelerometer is capable of detecting acceleration and converting the detected acceleration to electrical signals in a first frequency range, and the second accelerometer is capable of detecting acceleration and converting the detected acceleration to electrical signals in a second frequency range.

14. The wheel-end mounted multipurpose sensor system defined in claim 9, wherein the first accelerometer comprises a substantially vertical signal accelerometer capable of measuring vertical acceleration in a first useful measurement range, and the second accelerometer comprises a substantially horizontal signal accelerometer capable of measuring horizontal acceleration in a second useful measurement range.

15. The wheel-end mounted multi-purpose sensor system defined in claim 14, wherein the first useful measurement range is about 14g or less, and the second useful measurement range is about 2.5g or less.

16. The wheel-end mounted multipurpose sensor system defined in claim 6, wherein said sensor is a dual axis accelerometer adapted to detect both substantially vertical and substantially horizontal motions.

17. The method defined in claim 6, wherein the at least first electrical signal is generated by the acceleration sensing device and the at least second electrical signal is generated by the acceleration sensing device, wherein the at least first and second electrical signals are transmitted to at least one vehicle mounted control/monitoring system.

18. The method defined in claim 17, wherein the at least one vehicle mounted control/monitoring system comprises one chosen from the group consisting of an active suspension system, a semi-active suspension system.

19. The method defined in claim 6, wherein the vehicle operating systems to which input signals are provided comprises a wheel speed sensing system, as a component of an anti-lock braking system or an electronic braking system.
